(19) **Europäisches Patentamt**
**European Patent Office**
**Office européen des brevets**

(11) **EP 4 513 816 A1**

(12) **EUROPEAN PATENT APPLICATION**
published in accordance with Art. 153(4) EPC

(43) Date of publication:
**26.02.2025 Bulletin 2025/09**

(21) Application number: **23803855.8**

(22) Date of filing: **10.05.2023**

(51) International Patent Classification (IPC):
**H04L 5/00** (2006.01)  **H04L 1/00** (2006.01)
**H04W 72/04** (2023.01)  **H04W 72/50** (2023.01)
**H04J 11/00** (2006.01)  **H04W 72/541** (2023.01)
**H04W 72/53** (2023.01)  **H04W 24/08** (2009.01)

(52) Cooperative Patent Classification (CPC):
**H04J 11/00; H04L 1/00; H04L 5/00; H04W 24/08;**
**H04W 72/04; H04W 72/50; H04W 72/53;**
**H04W 72/541**

(86) International application number:
**PCT/KR2023/006380**

(87) International publication number:
**WO 2023/219432 (16.11.2023 Gazette 2023/46)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **10.05.2022 KR 20220057105**
**08.07.2022 KR 20220084445**
**25.10.2022 KR 20220138674**

(71) Applicant: **Samsung Electronics Co., Ltd.**
**Suwon-si, Gyeonggi-do 16677 (KR)**

(72) Inventors:
• **KO, Soomin**
  **Suwon-si Gyeonggi-do 16677 (KR)**
• **KIM, Jeongchan**
  **Suwon-si Gyeonggi-do 16677 (KR)**
• **CHOI, Okyoung**
  **Suwon-si Gyeonggi-do 16677 (KR)**

(74) Representative: **HGF**
**HGF Limited**
**1 City Walk**
**Leeds LS11 9DX (GB)**

(54) **METHOD AND DEVICE FOR CONTROLLING INTER-CELL INTERFERENCE IN WIRELESS COMMUNICATION SYSTEM**

(57) The present disclosure relates to a 5G or 6G communication system for supporting higher data transmission rate. According to various embodiments disclosed in the present document, a method performed by a serving base station in a wireless communication system may comprise the steps of: receiving information about an aggregated slot from an aggregated slot managing device; aggregating, on the basis of the information about the aggregated slot, traffic to be transmitted during a specific interval into the aggregated slot and scheduling same; determining adaptive modulation and coding (AMC) parameters separately for an aggregated slot and a non-aggregated slot; and transmitting the traffic for the aggregated slot using the determined AMC parameters. Various other embodiments identified through the specification are possible.

**EP 4 513 816 A1**

**(Cont. next page)**

900

| 910 |
| Serving cell |

| 920 |
| Aggregated slot management device |

| 930 |
| Interfering cell |

| Configure aggregated slot | 935 |

Information on aggregated slot          Information on aggregated slot          940

| 945 | Allocate traffic to aggregated slot |

| Allocate traffic to aggregated slot | 960 |

| 950 | Determine AMC |

| 955 | Transmit traffic |

| Transmit traffic | 965 |

# FIG.9

## Description

[Technical Field]

The disclosure relates to a wireless communication system and, more particularly, to a method and a device for controlling inter-cell interference in a wireless communication system.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultrahigh-performance communication and computing resources.

In a communication/broadcasting system, link performance may be significantly degraded by various types of noise, a fading phenomenon, and inter-symbol interference (ISI) of a channel. Therefore, in order to implement high-speed digital communication/broadcasting systems requiring high data throughput and reliability such as next-generation mobile communications, digital broadcasting, and portable Internet, it is required to develop a technology for overcoming noise, fading, and inter-symbol interface.

[Disclosure of Invention]

[Technical Problem]

Various embodiments of the disclosure provide a device and a method performed by a serving cell for controlling inter-cell interference in a wireless communication system.

[Solution to Problem]

According to various embodiments of the disclosure, a method performed by a serving base station in a wireless communication system may include receiving information on an aggregated slot from an aggregated slot management device, aggregating, based on the information on the aggregated slot, traffic to be transmitted during a predetermined interval into the aggregated slot and scheduling the aggregated traffic, determining separate adaptive modulation and coding (AMC) for the aggregated slot and a non-aggregated slot, and transmitting the traffic to a terminal in the aggregated slot by using the determined AMC.

According to various embodiments of the disclosure, a device of a serving base station in a wireless communication system may include a transceiver and at least one processor, wherein the at least one processor is configured to

receive information on an aggregated slot from an aggregated slot management device, aggregate, based on the information on the aggregated slot, traffic to be transmitted during a predetermined interval into the aggregated slot and schedule the aggregated traffic, determine separate adaptive modulation and coding (AMC) for the aggregated slot and a non-aggregated slot, and transmit the traffic of the aggregated slot to a terminal by using the determined AMC.

According to various embodiments of the disclosure, a method performed by a neighboring base station in a wireless communication system may include receiving information on an aggregated slot from an aggregated slot management device, aggregating, based on the information on the aggregated slot, traffic to be transmitted during a predetermined interval into the aggregated slot and scheduling the aggregated traffic, and transmitting the traffic to a terminal in the aggregated slot.

According to various embodiments of the disclosure, a device of a neighboring base station in a wireless communication system may include a transceiver and at least one processor, wherein the at least one processor is configured to receive information on an aggregated slot from an aggregated slot management device, aggregate, based on the information on the aggregated slot, traffic to be transmitted during a predetermined interval into the aggregated slot and schedule the aggregated traffic, and transmit the traffic to a terminal in the aggregated slot.

[Brief Description of Drawings]

FIG. 1 illustrates an example of a radio resource region in a wireless communication system according to various embodiments of the disclosure;

FIG. 2 illustrates an example of radio resource allocation when an aggregated slot is configured according to various embodiments of the disclosure;

FIG. 3 illustrates an example of radio resource allocation when an aggregated slot is configured according to various embodiments of the disclosure;

FIG. 4 illustrates an example of radio resource allocation when an aggregated slot is configured according to various embodiments of the disclosure;

FIG. 5 illustrates an example of radio resource allocation when an aggregated slot is configured according to various embodiments of the disclosure;

FIG. 6 illustrates a buffer occupancy (BO) state of a base station when an aggregated slot is configured according to various embodiments of the disclosure;

FIG. 7 illustrates a block diagram in which a resource is allocated according to various embodiments of the disclosure;

FIG. 8 illustrates an example of the number of code-blocks (CBs) and an RB per CB according to a modulation coding scheduling (MCS) level according to various embodiments of the disclosure;

FIG. 9 illustrates a flow chart of operations for inter-cell interference control between cells and an aggregated slot management device according to various embodiments of the disclosure;

FIG. 10 illustrates an operation of a serving base station according to various embodiments of the disclosure;

FIG. 11 illustrates an operation of an interfering base station according to various embodiments of the disclosure;

FIG. 12 illustrates a graph of a slot usage relative to a period of an aggregated slot according to various embodiments of the disclosure;

FIG. 13 illustrates a graph of a slot usage relative to a period of an aggregated slot according to various embodiments of the disclosure; and

FIG. 14 illustrates a graph of data throughput relative to a signal to noise ratio (SNR) according to various embodiments of the disclosure.

FIG. 15 illustrates a structure of a base station in a wireless communication system according to various embodiments of the disclosure.

With regard to the description of the drawings, the same or like reference signs may be used to designate the same or like elements.

[Mode for Carrying out the Invention]

Various aspects of the claimed subject matter are now described with reference to the drawings, wherein like reference numerals are used to refer to like elements throughout. In the following description, for purposes of explanation, numerous specific details are set forth in order to provide a thorough understanding of one or more aspects. It may be apparent, however, that such aspect(s) may be practiced without these specific details.

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

In the following description, terms referring to signals (e.g., message, signal, signaling, sequence, and stream), terms referring to resources (e.g., symbol, slot, subframe, radio frame, subcarrier, resource element (RE), resource block (RB), bandwidth part (BWP), and occasion), terms referring to operations (e.g., step, method, process, and procedure), terms referring to data (e.g., information, parameter, variable, value, bit, symbol, and codeword), terms referring to channels, terms referring to control information (e.g., downlink control information (DCI), media access control control element (MAC CE), and radio resource control (RRC) signaling), terms referring to network entities, terms referring to device elements, and the like are illustratively used for the sake of desctiptive convenience. Therefore, the disclosure is not limited by the terms as used below, and other terms having equivalent technical meanings may be used.

Various aspects are described herein in connection with a wireless terminal and/or a base station. A wireless terminal can refer to a device providing voice and/or data connectivity to a user. A wireless terminal can be connected to a computing device such as a laptop computer or desktop computer, or it can be a self - contained device such as a personal digital assistant (PDA). A wireless terminal may also be referred to as a system, a subscriber unit, a subscriber station, a mobile station, a mobile, a mobile device, a remote station, a remote terminal, an access terminal, a user terminal, a terminal, a wireless communication device, a user agent, a user device, or user equipment. A wireless terminal may be a subscriber station, a wireless device, a cellular telephone, a PCS telephone, a cordless telephone, a session initiation protocol (SIP) phone, a wireless local loop (WLL) station, a personal digital assistant (PDA), a handheld device having wireless connection capability, or other processing device connected to a wireless modem. A base station (e.g., access point) may refer to a device in an access network that communicates over the air-interface, through one or more sectors, with wireless terminals. The base station may act as a router between the wireless terminal and the rest of the access network, which can include an Internet Protocol (IP) network, by converting received air-interface frames to IP packets. The base station also coordinates management of attributes for the air interface.

The terms used in the disclosure are used merely to describe particular embodiments, and may not be intended to limit the scope of other embodiments. A singular expression may include a plural expression unless they are definitely different in a context. All terms used herein, including technical and scientific terms, have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

When two base stations are placed adjacent to each other and the coverage of the two base stations partially overlaps, a strong downlink (DL) signal from one base station may cause interference to a terminal served by the other base station. That is, inter-cell interference (ICI) may occur between a serving cell formed by base stations and an interfering cell adjacent to the serving cell to cause interference.

Unlike an LTE system, an NR system is designed based on the Ultra-Lean principle to minimize Always-On transmission, and thus if there is no actual data to be transmitted, interference may not occur with a neighboring cell. Therefore, control of ICI in the 5G NR system is receiving attention as one of the representative technologies for improving network performance.

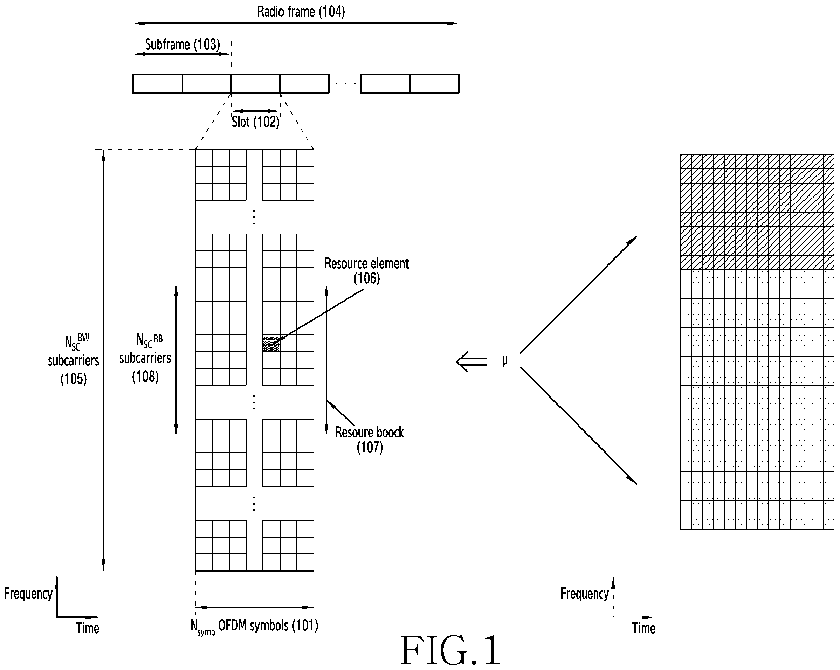

FIG. 1 illustrates an example of a radio resource region in a wireless communication system according to various embodiments of the disclosure.

In various embodiments of the disclosure, a radio resource region may include a structure of a time-frequency domain. According to an embodiment, a wireless communication system may include an NR communication system.

Referring to FIG. 1, in the radio resource region, the horizontal axis indicates a time domain, and the vertical axis indicates a frequency domain. The length of a radio frame 104 is 10 ms. The radio frame 104 may be a time domain interval configured by 10 subframes. The length of a subframe 203 is 1 ms. The unit of configuration in the time domain may be an orthogonal frequency division multiplexing (OFDM) and/or a DFT-s-OFDM (discrete Fourier transform (DFT)-spread-OFDM) symbol, and Nsymb OFDM symbols and/or DFT-s-OFDM symbols 101 may be aggregated to configure one slot 102. In various embodiments, an OFDM symbol may include a symbol for a case of transmitting and receiving a signal by using an OFDM multiplexing scheme, and a DFT-s-OFDM symbol may include a symbol for a case of transmitting and receiving a signal by using a DFT-s-OFDM or single carrier frequency division multiple access (SC-FDMA) multiplexing scheme. The minimum transmission unit in the frequency domain is a subcarrier, and a carrier bandwidth configuring a resource grid may be configured by a total of NscBW subcarriers 105. In addition, in the disclosure, an embodiment regarding downlink signal transmission and reception is described for convenience of description, but this is also applicable to an embodiment regarding uplink signal transmission and reception.

In some embodiments, the number of slots 102 configuring one subframe 103 and the length of a slot 102 may vary depending on a subcarrier spacing. Such a subcarrier spacing may be referred to as numerology ($\mu$). That is, a subcarrier spacing, the number of slots included in a subframe, the length of a slot, and the length of a subframe may be variably configured. For example, in an NR communication system, when a subcarrier spacing (SCS) is 15 kHz, one slot 102 may configure one subframe 103, and each of the lengths of the slot 102 and the subframe 103 may be 1 ms. In addition, for example, if the subcarrier spacing is 30 kHz, two slots may configure one subframe 103. In this case, the length of the slot is 0.5 ms and the length of the subframe is 1 ms.

In some embodiments, a subcarrier spacing, the number of slots included in a subframe, the length of a slot, and the length of the subframe may be variably applied depending on a communication system. For example, in the case of the LTE system, a subcarrier spacing is 15 kHz, two slots configure one subframe, and in this case, the length of a slot may be 0.5 ms and the length of the subframe may be 1 ms. For another example, in the case of the NR system, a subcarrier spacing ($\mu$) may be one of 15 kHz, 30 kHz, 60 kHz, 120 kHz, and 240 kHz, and the number of slots included in one subframe according to the subcarrier spacing ($\mu$) may be 1, 2, 4, 8, and 16.

The basic unit of a resource in the time-frequency domain may be a resource element (RE) 106, and the resource element 106 may be expressed as an OFDM symbol index and a subcarrier index. A resource block may include multiple resource elements. In the NR system, a resource block (RB) (or a physical resource block (PRB)) 107 may be defined as $N_{SCRB}$ consecutive subcarriers in the frequency domain. The number of subcarriers may be $N_{SCRB}$ =12. The frequency domain may include common resource blocks (CRBs). A physical resource block (PRB) may be defined in a bandwidth part (BWP) on the frequency domain. CRB and PRB numbers may be determined differently depending on a subcarrier spacing. In the LTE system, an RB may be defined as $N_{symb}$ consecutive OFDM symbols in the time domain and $N_{SCRB}$ consecutive subcarriers in the frequency domain.

In the NR and/or LTE system, scheduling information for downlink data or uplink data may be transmitted from a base station to a UE via downlink control information (DCI). In various embodiments, the DCI may be defined according to various formats, and each format may indicate whether the DCI includes scheduling information (e.g., UL grant) for uplink data, whether the DCI includes scheduling information (DL resource allocation) for downlink data, whether the DCI is compact DCI having a small size of control information, whether the DCI is fallback DCI, whether spatial multiplexing using multiple antennas is applied, and/or whether the DCI is DCI for power control. For example, NR DCI format 1_0 or NR DCI format 1_1 may include scheduling for downlink data. In addition, for example, NR DCI format 0_0 or NR DCI format 0_1 may include scheduling for uplink data.

As described above, FIG. 1 illustrates an example of a downlink and uplink slot structure in a wireless communication system. In particular, FIG. 1 illustrates a structure of a resource grid of a 3GPP NR system. Referring to FIG. 1, a slot may include multiple orthogonal frequency division multiplexing (OFDM) symbols in the time domain and include multiple resource blocks (RBs) in the frequency domain. A signal may be configured by a part or the entirety of the resource grid. In addition, the number of OFDM symbols included in one slot may generally vary depending on the length of a cyclic prefix (CP). In FIG. 1, for convenience of description, the case in which one slot is configured by 14 OFDM symbols is illustrated, but in the case of the signal referred to in the disclosure, the configuration of symbols is not specified. In addition, a modulation scheme of a generated signal is not limited to a specific value of quadrature amplitude modulation (QAM), and may follow modulation schemes of various communication standards such as binary phase-shift keying (BPSK) and quadrature phase shift keying (QPSK).

Although various embodiments of the disclosure are described based on the LTE communication system or the NR communication system, the content of the disclosure is not limited thereto and may be applied in various wireless communication systems for transmitting downlink or uplink control information. In addition, it is obvious that the content of the disclosure may be applied, as needed, in an unlicensed band in addition to a licensed band.

In the following description of the disclosure, higher layer signaling may be performed or a higher signal may be transmitted by a signal transmission method in which a base station transmits a signal to a user equipment (UE) by using a downlink data channel of a physical layer, or the UE transmits a signal to the base station by using an uplink data channel of the physical layer. According to an embodiment, the higher layer signaling may include at least one of radio resource control (RRC) signaling, signaling according to an F1 interface between a centralized unit (CU) and a distributed unit (DU), or a method of transmitting a signal through a media access control (MAC) control element (MAC CE). In addition, according to an embodiment, the higher layer signaling or higher signal may include system information that is commonly transmitted to multiple UEs, such as a system information block (SIB).

In a 5G wireless communication system, a synchronization signal block (SSB) (or referred to as an SS block, an SS/PBCH block, etc.) may be transmitted for initial access, and the synchronization signal block may be configured by a primary synchronization signal (PSS), a secondary synchronization, signal (SSS), and a physical broadcast channel (PBCH). In an initial access step in which a UE first accesses the system, the UE may obtain downlink time and frequency domain synchronization from a synchronization signal and obtain a cell ID, through a cell search procedure. The synchronization signal may include a PSS and an SSS. The UE may receive a PBCH including a master information block (MIB) from a base station to obtain a basic parameter value and system information related to transmission and reception, such as a system bandwidth or related control information. The UE may obtain a system information block (SIB) by performing decoding on a physical downlink control channel (PDCCH) and a physical downlink shared channel (PDSCH), based on the received PBCH. Thereafter, the UE may exchange identity with the base station through a random access step and may initially access a network through steps such as registration and authentication.

As described above, one slot may include 14 symbols, and in the 5G communication system, uplink-downlink configuration of a symbol and/or a slot may be configured in three steps.

In a first method, an uplink-downlink of a symbol and/or a slot may be semi-statically configured through cell-specific configuration information through system information in the unit of a symbol. More specifically, the cell-specific uplink-downlink configuration information through the system information may include uplink-downlink pattern information and reference subcarrier information. The uplink-downlink pattern information may indicate a pattern periodicity, the number of consecutive downlink slots from a start point of each pattern, the number of symbols in the next slot, the number of consecutive uplink slots from the end of a pattern, and the number of symbols in the next slot. A slot and a symbol which are not indicated as an uplink and a downlink may be determined as a flexible slot/symbol.

In a second method, through user-specific configuration information via dedicated higher layer signaling, a flexible slot or a slot including a flexible symbol may be indicated by the number of consecutive downlink symbols from a start symbol of each slot and the number of consecutive uplink symbols from the end of a slot, or indicated as a downlink or uplink of the entire slot.

In a third method, in order to dynamically change downlink signal transmission and uplink signal transmission intervals, symbols (e.g., symbols not indicated as a downlink and an uplink) indicated as flexible symbols in each slot may be indicated as downlink symbols, uplink symbols, or flexible symbols, respectively, through a slot format indicator (SFI) included in a downlink control channel. The slot format indicator may select one index from a table (e.g., 3GPP TS 38.213 Table 11.1.1-1) in which an uplink-downlink configuration of 14 symbols in one slot are preconfigured.

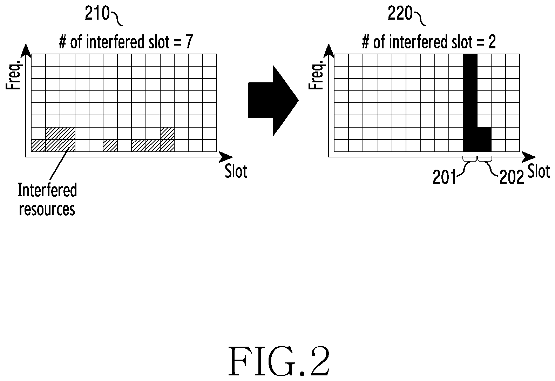

FIG. 2 illustrates an example of radio resource allocation when an aggregated slot is configured according to various embodiments of the disclosure.

Referring to FIG. 2, the horizontal axis indicates a time domain, and the vertical axis indicates a frequency domain. The unit of division in the time domain may be a slot, and the unit of division in the frequency domain may be a subcarrier.

Among radio resources allocated in a serving cell, there is a radio resource (interfered resource) that is interfered with by traffic of a neighboring cell. The traffic that is interfered with by the neighboring cell (that is, traffic of a neighboring cell that acts as interference to the serving cell) may be dispersed and may exist across multiple slots. Referring to FIG. 2, in a conventional case 210, radio resources that are interfered with by traffic of a neighboring cell may be distributed across a total of 7 slots with reference to the time axis.

According to an embodiment of the disclosure, in order to control inter-cell interference, a specific slot in the time domain to which traffic of a neighboring cell is to be aggregated and allocated may be configured. The specific slot in the time domain may be referred to as an aggregated slot or an interference aggregated slot. When an aggregated slot is configured, traffic transmitted in a predetermined interval may be aggregated and allocated to the aggregated slot.

An aggregated slot management device may preconfigure an aggregated slot and transmit information on the aggregated slot to the entire cell. Accordingly, positions of aggregated slots of cells managed by the aggregated slot management device may be aligned identically. Specifically, an aggregated slot for each cell may include the same operation interval and offset configuration.

According to an embodiment of the disclosure, radio resources to which traffic of a cell is allocated may be aggregated into a preconfigured aggregated slot and scheduled. Referring to FIG. 2, in a case where an aggregated slot is configured 220, radio resources to which traffic of a cell is allocated may be distributed across a total of two slots 201 and 202 with reference to the time axis. In this case, the frequency of a slot to which nothing is allocated, that is, a slot to which traffic is not allocated, may be increased.

According to an embodiment of the disclosure, when an aggregated slot is configured, a slot acting as interference may form a larger RB than before. However, in the NR system, even when decoding of only one code-block (CB) fails, the entire transport block (TB) including a CB may be treated as a transmission failure, and thus the size of an RB may have a less impact on throughput of data transmission. Therefore, even when the size of the RB acting as interference increases by configuring an aggregated slot, the adverse impact on the throughput of data transmission is small, and rather, the number of slots acting as interference is reduced and thus the total amount of interference is reduced, thereby improving the performance of data transmission.

According to an embodiment of the disclosure, when an aggregated slot is configured, the probability of inter-cell interference of a neighboring cell in the aggregated slot increases, but the probability of inter-cell interference of a neighboring cell in other slots (hereinafter, non-aggregated slots) decreases, and thus it is possible to distinguish between a time zone with a high probability of occurrence of inter-cell interference and a time zone with a low probability of occurrence of inter-cell interference.

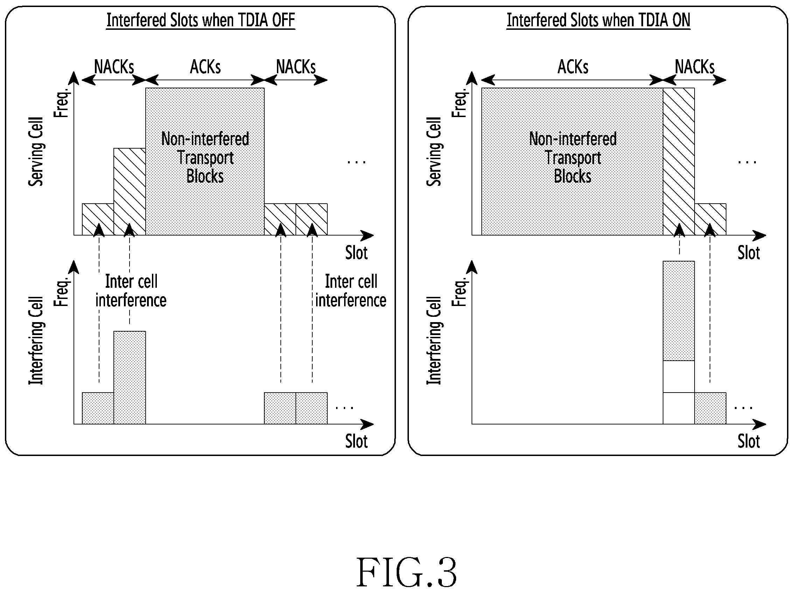

FIG. 3 illustrates an example of radio resource allocation when an aggregated slot is configured according to various embodiments of the disclosure.

Referring to FIG. 3, the horizontal axis of a graph indicates a time domain, and the vertical axis thereof indicates a frequency domain. The unit of division in the time domain may be a slot, and the unit of division in the frequency domain may be a subcarrier.

According to an embodiment of the disclosure, an aggregated slot management device may aggregate traffic of a cell and configure the traffic to be allocated to a specific slot in the time domain. In this case, the specific slot in the time domain may be referred to as an aggregated slot. Cells managed by the aggregated slot management device may aggregate and allocate traffic of the cells to the aggregated slot, based on information on such an aggregated slot. An operation of configuring an aggregated slot to control inter-cell interference in the time domain by the aggregated slot management device may be referred to as time domain interference slot alignment (TDIA).

The aggregated slot management device may preconfigure and transmit information on the aggregated slot to the entire cell. Accordingly, positions of aggregated slots of cells managed by the aggregated slot management device may be aligned identically. Specifically, an aggregated slot for each cell may include the same operation interval and offset configuration.

Referring to FIG. 3, when an aggregated slot is not configured, randomly distributed traffic from a neighboring cell that is adjacent to a serving cell to cause inter-cell interference may affect the serving cell. The serving cell may be affected by interference according to a slot in which traffic within the neighboring cell is distributed. On the other hand, when an aggregated slot is configured, traffic of a cell may be aggregated and allocated to the aggregated slot of the cell. When traffic of a neighboring cell that acts as interference to the aggregated slot is aggregated and allocated, an interval of a non-aggregated slot to which traffic acting as interference to the cell is allocated may be longer. The non-aggregated slot may refer to a slot other than a configured aggregated slot, and may be a slot having a low possibility of occurrence of inter-cell interference.

That is, when TDIA operates, the serving cell may transmit more slots in which there is traffic that does not act as interference to a UE than when TDIA does not operate, and accordingly, the serving cell may obtain an effect that is less affected by inter-cell interference of an interfering cell.

According to an embodiment of the disclosure, when an aggregated slot is configured, the probability of inter-cell interference of a neighboring cell in the aggregated slot increases, but the probability of inter-cell interference of a neighboring cell in other slots (hereinafter, non-aggregated slots) may decrease. On the other hand, when an aggregated slot is not configured, the probability of occurrence of inter-cell interference of a neighboring cell may occur randomly for each slot.

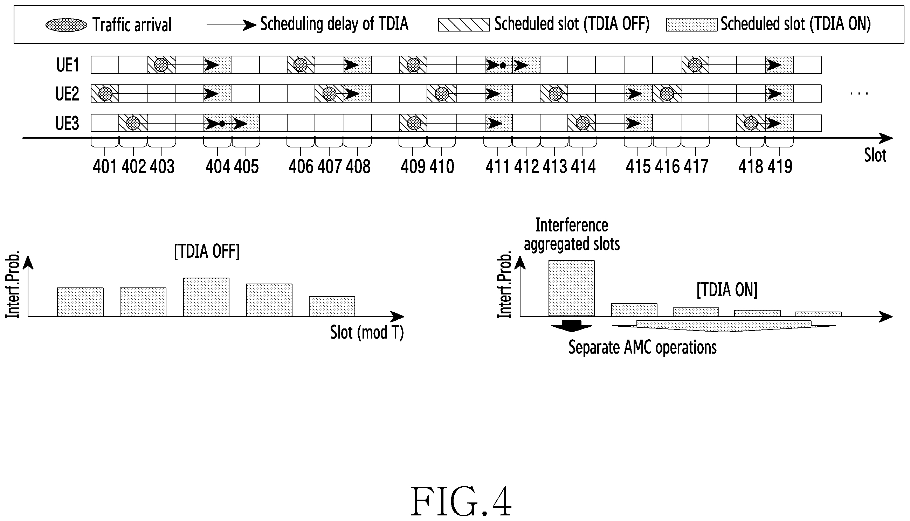

FIG. 4 illustrates an example of radio resource allocation when an aggregated slot is configured according to various embodiments of the disclosure.

According to an embodiment of the disclosure, when an aggregated slot is configured, a cell may schedule traffic to be transmitted in a predetermined interval to the configured aggregated slot. More specifically, when traffic occurs, the cell may wait without transmitting the traffic until the configured aggregated slot is reached. Since such traffic may act as interference to a neighboring cell, the traffic may be aggregated and allocated to the aggregated slot and transmitted to a UE. That is, the traffic may be delayed in transmission until the aggregated slot is reached, and may not be transmitted to the UE.

Additionally, when no more traffic may be allocated to the aggregated slot, the traffic may be allocated to the next slot of the aggregated slot. In this case, the next slot of the aggregated slot may be a non-aggregated slot.

Referring to FIG. 4, when an aggregated slot is not configured and traffic is transmitted, traffic of a cell is transmitted to UE 1 to UE 3, and the number of aggregated slots to which the traffic of the cell is allocated may be 12 (401 to 403, 406, 407, 409, 410, 413, 414, and 416 to 418). On the other hand, when an aggregated slot is configured and traffic is aggregated into the aggregated slot and transmitted, the number of aggregated slots may be reduced to 7 (404, 405, 408, 411, 412, 415, and 419) compared to the number of aggregated slots when the aggregated slot is not configured.

According to an embodiment of the disclosure, when a heavy traffic UE exists in a serving cell and a light traffic UE exists in an interfering cell, traffic of both the serving cell and the interfering cell may be aggregated and allocated to an aggregated slot. In this case, traffic exceeding the traffic allocated to the aggregated slot of the interfering cell of the serving cell may be less affected by inter-cell interference due to the traffic of the interfering cell. For example, referring to FIG. 4, when UE 3 exists in the serving cell and UE 1 or UE 2 exists in the interfering cell, the traffic of both the serving cell and the interfering cell may be aggregated into the aggregated slots 404 and 405. In this case, traffic of UE 3 allocated to the slot 405, which exceeds the traffic allocated to the aggregated slot 404 of UE 1 or UE 2, may not be affected by interference. Accordingly, UE 3 located in the serving cell may obtain a performance gain as much as the traffic of the slot 405 that is not affected by interference.

Referring to FIG. 4, when an aggregated slot is not configured and traffic is transmitted, the probability of occurrence of inter-cell interference per slot exists randomly for each slot, but when traffic is aggregated into the aggregated slot and transmitted, the probability of occurrence of inter-cell interference of a neighboring cell in the aggregated slot is high and the probability of inter-cell interference of a neighboring cell in a non-aggregated slot is low, and thus it is possible to distinguish between a time zone with a high probability of occurrence of inter-cell interference and a time zone with a low probability of occurrence of inter-cell interference. In addition, even when the size of an RB of interference is larger, the decoding performance of a CB may not be significantly affected. That is, even when the size of an RB acting as interference increases by configuring an aggregated slot, the adverse impact on throughput of data transmission is small, and rather, the number of slots acting as interference is reduced and thus the total amount of interference is reduced, thereby improving the performance of data transmission.

According to an embodiment of the disclosure, since the probability of occurrence of inter-cell interference is high in an aggregated slot, separate adaptive modulation and coding (AMC) may be determined for each of the aggregated slot and a slot other than the aggregated slot (hereinafter, a non-aggregated slot).

A maximum expected value for downlink data throughput from a cell to a UE is as shown in <equation 1> below.

【Equation 1】

$$\max_{r_1, r_2, a} [a r_1 p_1(r_1) + (1-a) r_2 p_2(r_2)]$$

$$\text{s.t. } a p_1(r_1) + (1-a) p_2(r_2) \geq p_t$$

$p_1$ and $p_2$ may refer to data transmission probabilities in the case of no inter-cell interference, and $r_1$ and $r_2$ may refer to TBSs to which an AMC determination in the case of no inter-cell interference is applied. $a$ may refer to the probability of occurrence of inter-cell interference. $p_t$ may refer to the target probability of successful transmission and may be defined as $p_t$ = 1 -target block error rate (BLER).

In general, it may be difficult to know whether there is inter-cell interference in each time zone in a wireless communication system. Therefore, the same AMC determination is applied regardless of whether there is inter-cell interference. In this case, <Equation 1> may be expressed as the following <Equation 2>.

【Equation 2】

$$\max_{r} [r p(r)]$$

$$\text{s.t. } p(r) \geq p_t$$

r may refer to a value that replaces $r_n$, and p may indicate p = $a p_1$ + (1 - a)$p_2$. In order to determine the maximum data throughput, information on successful transmission probability p may be required. However, it may be difficult to determine the information on p due to inter-cell interference and the mobility of a radio resource. Therefore, the maximum data throughput may be determined by reducing the probability a of occurrence of inter-cell interference.

According to an embodiment of the disclosure, when a separate AMC determination is applied to an aggregated slot and a non-aggregated slot to which traffic of a neighboring cell that acts as interference is aggregated and allocated, the probability of occurrence of inter-cell interference may be indirectly reduced.

If the past transmission in the aggregated slot is an ACK, a base station may increase a signal to interference noise ratio (SINR) of the aggregated slot, and if the past transmission in the aggregated slot is a NACK, may decrease the SINR. If the past transmission in the non-aggregated slot is an ACK, the base station may increase an SINR of the non-aggregated slot, and if the past transmission in the non-aggregated slot is a NACK, may decrease the SINR. The SINR may be increased by increasing the strength of a reception signal of an uplink.

An adaptive modulation and coding selection (MCS) level is selected according to a signal SINR ratio of a channel through which data is transmitted and received. A low MCS level is applied to the aggregated slot, and a high MCS level is applied to the non-aggregated slot, so that a low data transmission rate may be applied to the aggregated slot in which the frequency of occurrence of inter-cell interference is expected to be high.

The detailed operation of configuring an aggregated slot to aggregate and allocate traffic of a neighboring cell that acts as interference, and applying a separate AMC determination to the aggregated slot and a non-aggregated slot may be expressed by algorithm in <Table 1> below.

【Table 1】

| |
| --- |
| **Input:** TDIA period $T$, UE set $K$, CSI/HARQ feedback |
| **Output:** data rate for IA or non-IA slot ($r_n(k)$) |
| 1: **procedure** TDIA-AMC |
| 2:    **for** each time t |
| 3:       **if** ($t == 0$) **then** |
| 4:          **for all** $k \in K$ **do** |
| 5:             **initialize** $offset_n(k) = 0, \forall n \in \{1,2\}$ |
| 6:          **end for** |
| 7:       **end if** |
| 8:       **if** ($\mathrm{mod}(t, T) == 0$) **then** // IA slot |
| 9:          **set** $n = 1$ |
| 10:     **else** // non-IA slot |
| 11:          **set** $n = 2$ |
| 12:     **end** |
| 13:     **for all** $k \in K$ **do** |
| 14:          **if** UE($k$)'s CSI feedback is received **then** |
| 15:             **set** $CQI = received\ CQI$ |
| 16:             **set** $RI = received\ RI$ |
| 17:             **set** $SINR(k) = CSItoSINR(CQI, RI)$ |
| 18:          **end if** |
| 19:          **if** UE($k$)'s HARQ feedback is received **then** |
| 20:             **set** $\tau$ =UE($k$)'s HARQ feedback delay |
| 21:             **if** ($\mathrm{mod}(t - \tau, T) == 0$) **then** // IA slot |
| 22:                **set** $m = 1$ |
| 23:             **else** // non-IA slot |
| 24:                **set** $m = 2$ |
| 25:             **end if** |
| 26:             **if** HARQ feedback == ACK **then** |
| 27:                $offset_m(k) += \Delta(1 - p_{t,m})$ |
| 28:             **else** // NACK |
| 29:                $offset_m(k) -= \Delta(p_{t,m})$ |
| 30:             **end if** |
| 31:          **end if** |
| 32:          **set** $SINR_n(k) = SINR(k) + offset_n(k)$ |

| 33: | set $r_n(k) = \mathrm{SINRtoDataRate}\left(\mathrm{SINR}_n(k)\right)$ |
|---|---|
| 34: | end for |
| 35: | end for |
| 36: end procedure | |

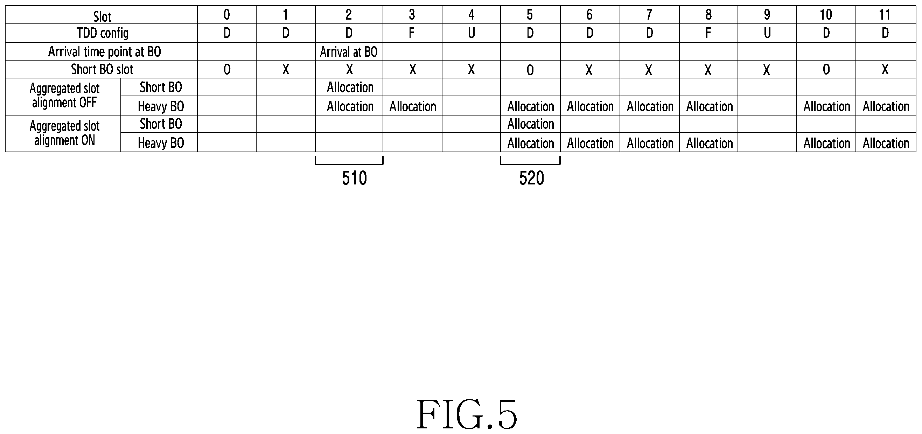

FIG. 5 illustrates an example of radio resource allocation when an aggregated slot is configured according to various embodiments of the disclosure.

Referring to FIG. 5, traffic allocation in slot indexes 0 to 11 is illustrated. Traffic may occur in a buffer occupancy (BO) of a base station in slot index 2 510. When an aggregated slot is not configured, the base station may allocate traffic acting as interference to slot indexes 2, 3, 5 to 8, 10, and 11 by combining a short BO and a heavy BO and transmit the traffic to a UE. That is, when the aggregated slot is not configured, the traffic acting as interference is randomly allocated, and a total of 8 slots (slot indexes 2, 3, 5 to 8, 10, and 11) may be affected by interference.

On the other hand, when an aggregated slot is configured, traffic acting as interference may be aggregated and allocated to the aggregated slot. For example, referring to FIG. 5, the aggregated slot is configured as slot index 5 520. In the case of the short BO, the base station may allocate and transmit traffic in slot index 5 520 without transmitting, to the UE, the traffic in slot index 2 510 where the traffic has arrived at a BO. In addition, in the case of the heavy BO, the base station may allocate traffic in slot index 5 520 without transmitting the traffic in slot index 2 510 where the traffic has arrived at a BO to the UE, and when the traffic exceeds an allocated radio resource, excess traffic may be allocated to a slot after slot index 5 520 for the excess traffic. That is, when the aggregated slot is configured, traffic acting as interference is aggregated and allocated to the aggregated slot, and a total of 6 slots (slot indexes 5 to 8, 10, and 11) may be affected by interference.

That is, compared to when an aggregated slot is not configured, when an aggregated slot is configured and traffic is aggregated, sorted, and allocated to the aggregated slot, the number of slots to which traffic that causes interference is allocated may be reduced. Accordingly, the probability of occurrence of interference is reduced, and the data communication performance of the network may be improved.

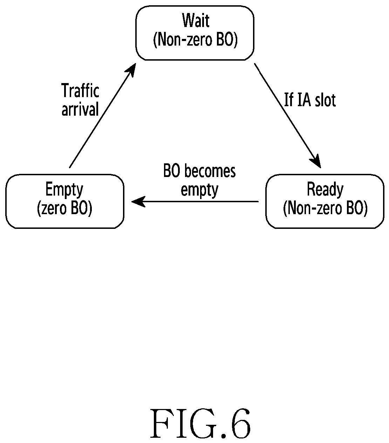

FIG. 6 illustrates a BO state of a base station when an aggregated slot is configured according to various embodiments of the disclosure. Specifically, FIG. 6 illustrates a BO state of a base station when a TDIA operation is performed.

Referring to FIG. 6, when a buffer occupancy (BO) of a base station is empty, this may be referred to as an empty state. If traffic occurs in the BO of the base station in the empty state, a state of the BO of the base station may indicate that the BO of the base station is filled with the traffic that has occurred (Non-zero BO). In this case, the BO state of the base station may be referred to as a wait state. In this case, the BO of the base station may maintain the wait state without transmitting traffic to a UE until the traffic arrives at an aggregated slot.

When the traffic having occurred in the BO of the base station arrives at the aggregated slot, the state of the BO may be changed to a ready state. In this case, the traffic having arrived at the aggregated slot may be transmitted to the UE. Even when additional traffic occurs thereafter, the traffic is allocated to the aggregated slot and transmitted to the UE, and thus the ready state may be maintained. The detailed operation of the TDIA operation may be expressed by algorithm in <Table 2> below.

【Table 2】

| |
|---|
| **Input**: TDIA period $T$, UE set $K$ |
| **Output**: decision on data transmission for each UE at each time slot |
| 1: **procedure** TDIA |
| 2:    **for** each time slot $t$ |
| 3:       **if** ($t == 0$) **then** |
| 4:          **for all** $k \in K$ **do** |
| 5:             **initialize** UE($k$).state = "*Empty*" |
| 6:          **end for** |
| 7:       **end if** |
| 8:       **if** ($mod(t, T) == 0$)) **then** // IA slot |
| 9:          AMC policy for IA slot will be applied |
| 10:       **else** // non-IA slot |
| 11:          AMC policy for non-IA slot will be applied |
| 12:       **end if** |
| 13:       **for all** $k \in K$ **do** |
| 14:          **if** (UE($k$)'s traffic is arrived) **then** |
| 15:             **if** (UE($k$).state == "*Empty*") **then** |
| 16:                **set** UE($k$).state = "*Wait*" |
| 17:             **end if** |
| 18:          **end if** |
| 19:          **if** ($mod(t, T) == 0$)) **then** // IA slot |
| 20:             **if** (UE($k$).state == "*Wait*") **then** |

```
21:                set UE(k).state = "Ready"
22:            end if
23:        end
24:    if (UE(k).state == "Ready") then
25:        transmission for UE(k) is allowed
26:    else
27:        transmission for UE(k) is not allowed
28:    end
29:    if (UE(k)'s BO becomes empty) then
30:        set UE(k).state = "Empty"
31:    end if
32:    end for
33:  end for
34: end procedure
```

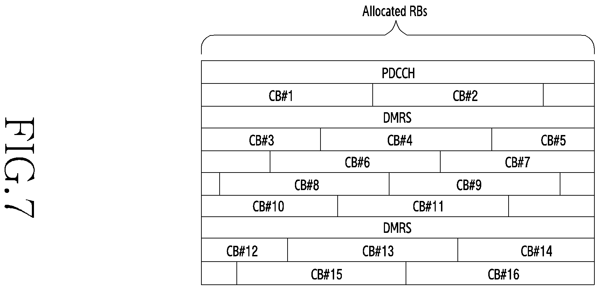

FIG. 7 illustrates a block diagram in which a resource is allocated according to various embodiments of the disclosure.

Referring to FIG. 7, the horizontal axis indicates a frequency domain, and the vertical axis indicates a time domain.

In the NR system, one transport block (hereinafter, referred to as a TB) may include multiple code blocks (hereinafter, referred to as CBs). A cyclic redundancy check (CRC) (not shown) may be added to the rear end or front end of one TB desired to be transmitted in an uplink or a downlink. The CRC may have 16 bits or 24 bits or a fixed number of bits, or have a variable number of bits according to a channel condition, and may be used to determine whether channel coding is successful. In the NR system, a TB may be configured by multiple CBs without a separate division process. Even when a CRC failure occurs in only one CB, a NACK determination that transmission has failed for the entire TB may be made.

The larger the size of a transport block (TB size, TBS), the greater the number of CBs may become. Accordingly, the number of resource blocks that may be occupied per transmission block may be reduced. As the TBS increases, it may be vulnerable to interference from a small number of RBs. That is, as the TBS increases, even when a CRC failure occurs in one of the multiple CBs included in the TB due to interference, the entire TB may be affected by interference. For example, as in FIG. 7, when a CRC failure occurs in at least one CB among CB #3 to CB #5 configuring one TB, a NACK determination that transmission has failed for the corresponding TB may be made.

According to an embodiment of the disclosure, as the TBS increases, it is vulnerable to interference from an RB, and thus the aggregating of traffic of a neighboring cell that acts as interference in a specific aggregated slot during a predetermined period of time may have a less impact from interference compared to when traffic of a neighboring cell that acts as interference is distributed across multiple slots. That is, even when the size of an RB acting as interference increases, if traffic of a neighboring cell acting as interference is aggregated and allocated to an aggregated slot, the size of the RB acting as interference increases, but the difference in performance may not be significant in that the entire TB to which a corresponding CB belongs is affected by interference regardless of the size of the RB.

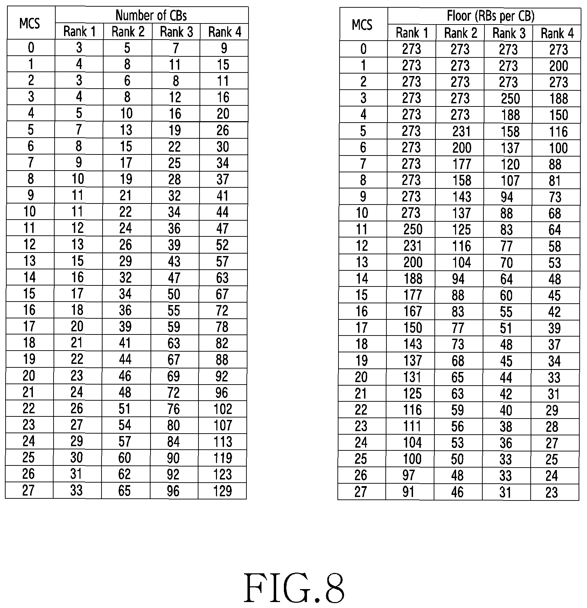

FIG. 8 illustrates an example of the number of code-blocks (CBs) and an RB per CB according to a modulation coding scheduling (MCS) level according to various embodiments of the disclosure.

According to FIG. 8, the number of CBs that may exist may be determined according to a level of a Rank indicating the number of transmission layers and an MCS level. For example, in the case of MCS 27 and Rank 4, the number of CBs may be 129. In addition, according to FIG. 8, an RB occupied per CB may be determined. For example, in the case of MCS 27 and Rank 4, 23 RBs may be occupied per CB. According to an embodiment of the disclosure, in the case of MCS 27 and Rank 4 in FIG. 8, when the size of traffic of a neighboring cell that acts as interference exceeds 23 RBs, as long as interference exceeding one CB configuring a TB occurs, a NACK determination may be made for the entire TB including the corresponding CB as if interference has occurred. That is, when interference exceeding the size of an RB occupied per CB occurs, even when the RB size of the interference is larger, the decoding performance of a CB may not be significantly affected. That is, even when the size of an RB acting as interference increases by configuring an aggregated slot, the adverse impact on throughput of data transmission is small, and rather, the number of slots acting as interference is reduced and thus the total amount of interference is reduced, thereby improving the performance of data transmission.

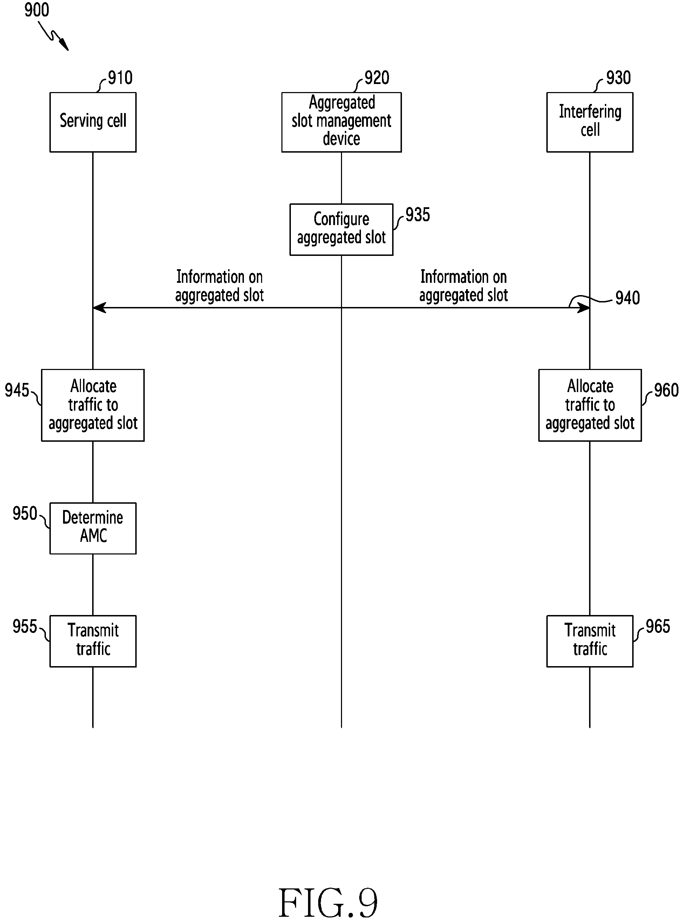

FIG. 9 illustrates a flow chart 900 between cells and an aggregated slot management device according to various embodiments of the disclosure.

Referring to FIG. 9, an aggregated slot management device 920 may configure a specific slot in a time domain for aggregating traffic of a cell in order to control inter-cell interference (935). The specific slot in the time domain may be referred to as an interference aggregated slot or an aggregated slot. When an aggregated slot is configured, traffic transmitted in a predetermined interval may be aggregated and allocated to the aggregated slot.

The aggregated slot management device 920 may be an entity on the network, may be an independent device, or may correspond to a part of functions of another network entity.

The aggregated slot management device may preconfigure an aggregated slot. Specifically, positions of aggregated slots of cells managed by the aggregated slot management device may be aligned identically. In addition, an aggregated slot for each cell may include the same operation interval and offset configuration.

According to an embodiment of the disclosure, radio resources to which traffic of a cell is allocated may be aggregated into a preconfigured aggregated slot and scheduled.

The aggregated slot management device 920 may transmit information on an aggregated slot configured for a serving cell 910 and an interfering cell 930 connected to the aggregated slot management device 920 (940). The serving cell 910 may refer to a serving base station that transmits data to a UE, and the interfering cell 930 may refer to a cell of an interfering base station that is adjacent to the serving base station and may cause inter-cell interference in data transmission to the UE by the serving cell.

According to an embodiment of the disclosure, the aggregated slot management device may transmit information on an aggregated slot having the same position for each of multiple cells to the multiple cells managed by the aggregated slot management device.

The serving cell 910 may aggregate and allocate traffic to be transmitted in a predetermined interval to the aggregated slot, based on the information on the aggregated slot received from the aggregated slot management device 920 (945). When the traffic allocated to the aggregated slot exceeds an allocated radio resource, the serving cell may allocate excess traffic to the next slot of the aggregated slot. According to an embodiment of the disclosure, even when the next slot of the aggregated slot is a non-aggregated slot, since a large portion of the traffic acting as interference to a radio resource of the serving cell may have already been transmitted in the aggregated slot, the impact of the excess traffic allocated to the non-aggregated slot on the serving cell may be minimized.

According to an embodiment of the disclosure, the serving cell may receive information on an aggregated slot of multiple neighboring cells from the aggregated slot management device. The serving cell may schedule traffic in the same aggregated slot as the aggregated slot of the multiple neighboring cells, based on the information on the aggregated slot of the multiple neighboring cells. In this case, the aggregated slot of the multiple neighboring cells may be an aggregated slot having the same position for each neighboring cell.

Thereafter, the serving cell 910 may determine separate AMC for the aggregated slot and the non-aggregated slot, based on the information on the aggregated slot (950). According to an embodiment of the disclosure, if the past transmission in the aggregated slot is an ACK, an SINR of the aggregated slot may be increased, and if the past transmission in the aggregated slot is a NACK, the SINR may be decreased. If the past transmission in the non-aggregated slot is an ACK, an SINR of the non-aggregated slot may be increased, and if the past transmission in the non-aggregated slot is a NACK, the SINR may be decreased. The SINR may be increased by increasing the strength of a reception signal of an uplink.

An adaptive modulation and coding selection (MCS) level is selected according to a signal SINR ratio of a channel through which data is transmitted and received. A low MCS level is applied to the aggregated slot, and a high MCS level is applied to the non-aggregated slot, so that a low data transmission rate may be applied to the aggregated slot in which the frequency of occurrence of inter-cell interference is expected to be high.

Finally, the serving cell 910 may transmit the traffic of the aggregated slot to the UE by using the separately determined AMC (955). In this case, the probability of occurrence of inter-cell interference of the traffic transmitted to the UE may be lower than the probability of occurrence of inter-cell interference of traffic when the aggregated slot is not configured.

According to an embodiment of the disclosure, the serving cell may transmit the traffic of the same aggregated slot as the aggregated slot of the multiple neighboring cells to the UE. In this case, the aggregated slot of the multiple neighboring cells may be an aggregated slot having the same position for each neighboring cell.

The interfering cell 930 may aggregate and allocate traffic to be transmitted in a predetermined interval to the aggregated slot, based on the information on the aggregated slot received from the aggregated slot management device 920 (960). The transmission may be delayed (latency) until traffic of a cell that may act as interference arrives at the aggregated slot. Accordingly, the traffic of the cell that may act as interference may be aggregated in the aggregated slot, and the number of slots occupied by the traffic of the cell may be reduced compared to the number of slots occupied by the traffic of the cell before the aggregated slot is configured. In other words, the number of slots acting as interference is reduced and thus the total amount of interference is reduced, thereby improving the performance of data transmission.

The interfering cell 930 may transmit, to the UE, traffic of a neighboring cell, that is aggregated in the aggregated slot and acts as interference (965).

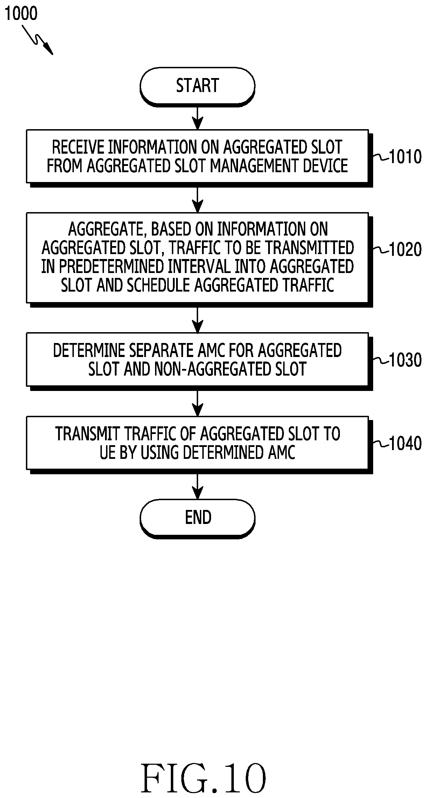

FIG. 10 illustrates an operation 1000 of a serving base station according to various embodiments of the disclosure. The serving cell 910 may refer to a serving base station that transmits data to a UE.

Referring to FIG. 10, in operation 1010, the serving cell may receive information on an aggregated slot from an aggregated slot management device connected to the serving cell. The information on the aggregated slot may include information in which a specific slot of a predetermined interval is configured as a slot for aggregating and allocating traffic of a cell.

In operation 1020, the serving cell may aggregate, based on the information on the aggregated slot, traffic to be transmitted in a predetermined interval into the aggregated slot and schedule the aggregated traffic.

According to an embodiment of the disclosure, when traffic allocated to the aggregated slot exceeds an allocated radio resource, the serving cell may allocate excess traffic to the next slot of the aggregated slot. In this case, even when the next slot of the aggregated slot is a non-aggregated slot, the excess traffic may be allocated.

In operation 1030, the serving cell may determine separate AMC for the aggregated slot and the non-aggregated slot. According to an embodiment of the disclosure, if the past transmission in the aggregated slot is an ACK, an SINR of the aggregated slot may be increased, and if the past transmission in the aggregated slot is a NACK, the SINR may be decreased. If the past transmission in the non-aggregated slot is an ACK, an SINR of the non-aggregated slot may be increased, and if the past transmission in the non-aggregated slot is a NACK, the SINR may be decreased. The SINR may be increased by increasing the strength of a reception signal of an uplink.

That is, a low MCS level is applied to the aggregated slot, and a high MCS level is applied to the non-aggregated slot, so that a low data transmission rate may be applied to the aggregated slot in which the frequency of occurrence of inter-cell interference is expected to be high.

In operation 1040, the serving cell may transmit the traffic of the aggregated slot to a UE by using the separately determined AMC. In this case, the probability of occurrence of inter-cell interference of the traffic transmitted to the UE may be lower than the probability of occurrence of inter-cell interference of traffic when the aggregated slot is not configured.

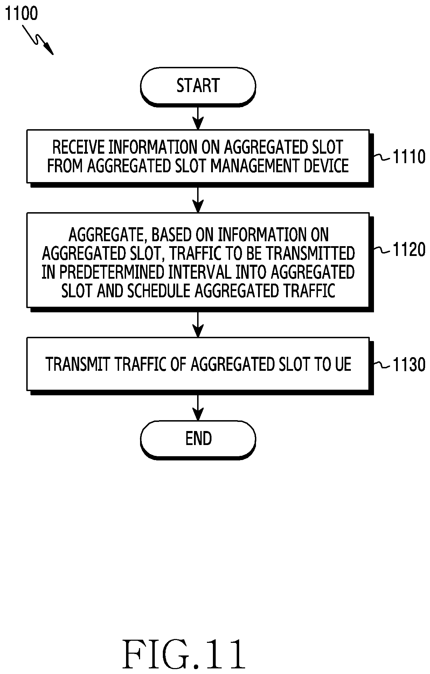

FIG. 11 illustrates an operation 1100 of a neighboring base station according to various embodiments of the disclosure. A neighboring cell may refer to a cell of a neighboring base station that is adjacent to a serving base station and may cause inter-cell interference in data transmission to a UE by the serving cell. The neighboring cell may be referred to as an interfering cell (for example, 930 of FIG. 9).

Referring to FIG. 11, in operation 1110, the neighboring cell may receive information on an aggregated slot from an aggregated slot management device connected to the neighboring cell. The information on the aggregated slot may include information in which a specific slot of a predetermined interval is configured as a slot for aggregating and allocating traffic of a cell.

In operation 1120, the neighboring cell may aggregate, based on the information on the aggregated slot received from the aggregated slot management device, traffic acting as interference to be transmitted in a predetermined interval into the aggregated slot and schedule the aggregated traffic. The transmission may be delayed (latency) until the traffic acting as interference arrives at the aggregated slot. Accordingly, traffic of a neighboring cell that acts as interference may be aggregated into the aggregated slot, and the number of slots occupied by the traffic of the neighboring cell that acts as interference may be reduced compared to the number of slots occupied by the traffic of the neighboring cell that acts as interference when the aggregated slot is not configured.

In operation 1130, the neighboring cell may transmit the traffic of the aggregated slot to the UE.

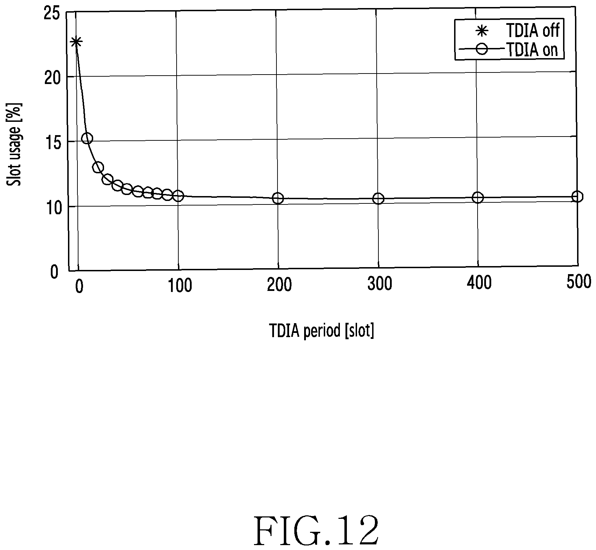

FIG. 12 illustrates a graph of a slot usage relative to a period of an aggregated slot according to various embodiments of the disclosure. Specifically, a result of a simulation based on a traffic pattern collected from a commercial network is illustrated.

Referring to FIG. 12, the horizontal axis may indicate a time domain, and specifically, a period of an aggregated slot configured through a TDIA operation which is an operation of configuring an aggregated slot to control inter-cell interference in the time domain. The vertical axis may indicate a slot usage, and the slot usage may refer to the ratio of slots used to transmit traffic among all slots. When the slot usage is high, there may be a high probability that there is a slot allocated with traffic of a neighboring cell that acts as interference in addition to traffic desired to be transmitted by a serving cell. That is, the slot usage may indicate the possibility of potential inter-cell interference.

In FIG. 12, when traffic is transmitted without configuring an aggregated slot (in the case of TDIA off), the slot usage may indicate a value of 22.7%. This may indicate that the probability of occurrence of potential inter-cell interference is 22.7%. In FIG. 12, when traffic is transmitted by configuring an aggregated slot (in the case of TDIA on), the slot usage may be lower than a value of 22.7% as an operation interval of the aggregated slot increases. For example, when the operation interval of the aggregated slot is configured to be 10 slots, the slot usage may be reduced to 15.2%. This may indicate that the probability of occurrence of potential inter-cell interference has been reduced to 15.2%. That is, if the transmission of the traffic is delayed for up to 10 slots and the traffic is aggregated and allocated, the probability of occurrence of inter-cell interference may be reduced by a total of 33% from 22.7% to 15.2%.

In addition, as the number of slots that constitute the operation interval of the aggregated slot increases, the slot usage may gradually decrease and then converge to a predetermined value. For example, in FIG. 12, when the operation interval of the aggregated slot is configured to be 10 slots, the slot usage is 15.2%, and when the operation interval of the aggregated slot is configured to be 30 slots, the slot usage is 12.0%. As the operation interval of the aggregated slot increases, the slot usage may gradually decrease and then converge to a value of 10.4%.

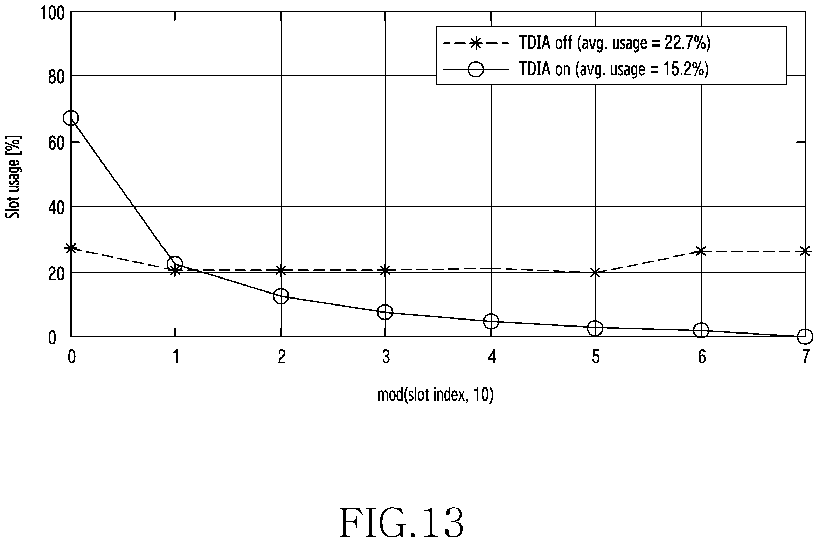

FIG. 13 illustrates a graph of a slot usage relative to a period of an aggregated slot according to various embodiments of the disclosure.

Referring to FIG. 13, the horizontal axis indicates a time domain, and specifically, indicates a slot index when an operation interval of an aggregated slot is configured to be 10 slots. The vertical axis may indicate a slot usage, and the slot usage may refer to the ratio of slots used to transmit traffic among all slots. When the slot usage is high, there may be a high probability that there is a slot allocated with traffic of a neighboring cell that acts as interference in addition to traffic desired to be transmitted by a serving cell. That is, the slot usage may indicate the possibility of potential inter-cell interference.

In FIG. 13, when traffic is transmitted without configuring an aggregated slot in a downlink (DL) (in the case of TDIA off), an average value of the slot usage may indicate a value of 22.7%. When an aggregated slot is configured and traffic is transmitted (in the case of TDIA on), the average value of the slot usage may indicate a value of 15.2%. That is, it may be seen that the average value of the slot usage is reduced from 22.7% to 15.2% when the aggregated slot is configured and traffic of a neighboring cell that acts as interference is aggregated and allocated, compared to when the aggregated slot is not configured. This may indicate that the probability of occurrence of potential inter-cell interference has been reduced from 22.7% to 15.2%.

In addition, when examining the pattern of the graph, in the case of transmitting traffic without configuring an aggregated slot, traffic causing interference is evenly distributed in each slot, and thus the slot usage may be evenly distributed across all slots. On the other hand, in the case of transmitting traffic by configuring an aggregated slot, traffic causing interference is aggregated in and around the aggregated slot, and thus the slot usage in the aggregated slot may be high.

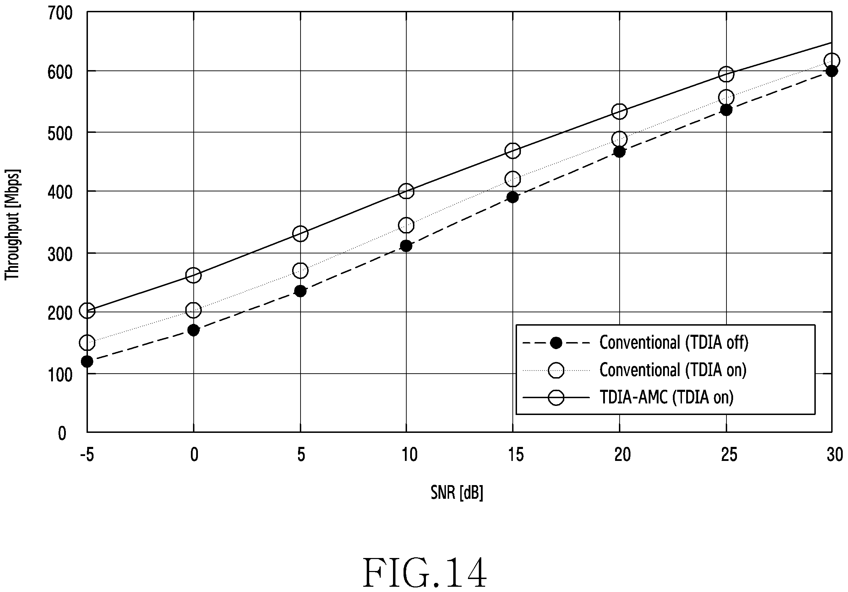

FIG. 14 illustrates a graph of data throughput relative to a signal to noise ratio (SNR) according to various embodiments of the disclosure.

Referring to FIG. 14, the horizontal axis of the graph indicates an SNR, and the vertical axis indicates throughput of DL data. When data is processed without configuring a conventional aggregated slot, the data throughput may be lower in relation to the SNR than when an aggregated slot is configured and data is processed.

Additionally, even in the case of transmitting traffic by configuring an aggregated slot, the data throughput may be higher in the case of aggregating and allocating traffic to an aggregated slot and determining separate AMC for the aggregated slot and a non-aggregated slot other than the aggregated slot, rather than aggregating and allocating traffic to an aggregated slot.

That is, it may be identified that the case of processing data by aggregating and allocating traffic of a neighboring cell that acts as interference to an aggregated slot shows higher data throughput than the case of processing data without configuring the aggregated slot. This may indicate that the case of configuring the aggregated slot may improve the performance of data processing. For example, in FIG. 14, when an aggregated slot is configured and separate AMC is determined for the aggregated slot and a non-aggregated slot (in the case of TDIA on), the data throughput is improved by 5 to 36% compared to the data throughput when the aggregated slot is not configured (in the case of TDIA off), and on average, the data throughput may be improved by 17%.

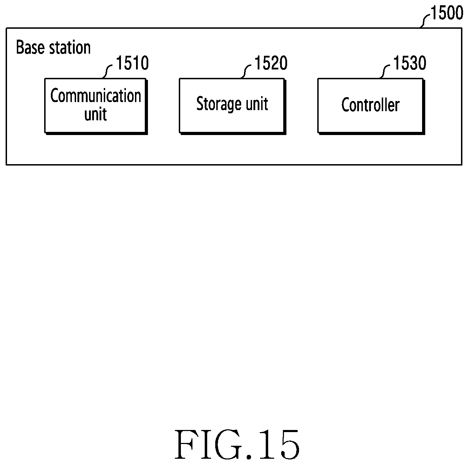

FIG. 15 illustrates a structure of a base station according to various embodiments of the disclosure.

Referring to FIG. 15, a base station 1500 includes a communication unit 1510, a storage 1520, and a controller 1530.

The communication unit 1510 performs functions for transmitting/receiving signals through a radio channel. For example, the communication unit 1510 performs functions of conversion between baseband signals and bitstrings according to the physical layer specifications of the system. For example, during data transmission, the communication unit 1510 encodes and modulates a transmitted bitstring to generate complex symbols. In addition, during data reception, the communication unit 1510 demodulates and decodes a baseband signal to restore a received bitstring. In addition, the wireless communication unit 1510 up-converts a baseband signal to an RF band signal, transmits the same through an antenna, and down-converts an RF band signal received through the antenna to a baseband signal.

To this end, the wireless communication unit 1510 may include a transmission filter, a reception filter, an amplifier, a mixer, an oscillator, a digital to analog converter (DAC), an analog to digital converter (ADC), and the like. In addition, the communication unit 1510 may include multiple transmission/reception paths. Furthermore, the wireless communication unit 1510 may include at least one antenna array including multiple antenna elements. In terms of hardware, the wireless communication unit 1510 may include a digital unit and an analog unit, and the analog unit may include multiple sub-units according to operation power, frequencies, etc.

The communication unit 1510 may transmit/receive signals. To this end, the communication unit 1510 may include at least one transceiver. For example, the communication unit 1510 may transmit a synchronization signal, a reference signal, system information, a message, control information, data, or the like. Furthermore, the communication unit 1510 may perform beamforming.

The communication unit 1510 transmits and receives signals as described above. Accordingly, all or part of the communication unit 1510 may be referred to as a "transmitter", a "receiver", or a "transceiver". In addition, as used in the following description, the meaning of "transmission and reception performed through a radio channel" includes the meaning that the above-described processing is performed by the communication unit 1510.

The storage 1520 stores data such as basic programs, application programs, and configuration information for operations of the base station. The storage 1520 may include a memory. The storage 1520 may include a volatile memory, a nonvolatile memory, or a combination of a volatile memory and a nonvolatile memory. In addition, the storage unit 1520 provides the stored data at the request of the controller 1530.

The controller 1530 controls the overall operation of the base station 1500. For example, the controller 1530 transmits/receives signals through the communication unit 1510. In addition, the controller 1530 records data in the storage 1520 and reads the data from the storage 230. Furthermore, the controller 1530 may perform functions of protocol stacks required by communication specifications. To this end, the controller 1530 may include at least one processor.

The structure of the base station 1500 illustrated in FIG. 15 is a merely an example of the base station, and examples of the base station for performing various embodiment of the disclosure are not limited to the structure illustrated in FIG. 15. That is, some elements may be added, omitted, or changed according to various embodiments.

In FIG. 15, the base station 1500 has been described as a single entity, but the disclosure is not limited thereto. In addition to the integrated deployment, the base station 1500 according to various embodiments of the disclosure may be implemented to construct an access network having a distributed deployment. According to an embodiment, the base station may be divided into a central unit (CU) and a digital unit (DU), the CU may be implemented to perform upper layer functions (e.g., packet data convergence protocol (PDCP) and RRC), and the DU may be implemented to perform lower layer functions (e.g., medium access control (MAC) and physical (PHY)). The DU of the base station may form beam coverage on a radio channel.

The embodiments of the disclosure are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary.

As described above, according to various embodiments of the disclosure, a method performed by a serving cell in a wireless communication system may include receiving information on an aggregated slot from an aggregated slot management device, aggregating, based on the information on the aggregated slot, traffic to be transmitted during a predetermined interval into the aggregated slot and scheduling the aggregated traffic, determining separate adaptive modulation and coding (AMC) for the aggregated slot and a non-aggregated slot, and transmitting the traffic of the aggregated slot to a terminal by using the determined AMC.

According to various embodiments of the disclosure, the method may include allocating excess traffic to the next slot of the aggregated slot when traffic allocated to the aggregated slot exceeds an allocated radio resource.

According to various embodiments of the disclosure, the aggregated slot may be aligned to the same position across all cells of a base station managed by the aggregated slot management device.

According to various embodiments of the disclosure, the aggregated slot may be repeatedly configured according to a preconfigured period.

According to various embodiments of the disclosure, the determining of the AMC may further include applying a low modulation coding scheduling (MCS) level to the aggregated slot, and applying a high MCS level to the non-aggregated slot.

As described above, according to various embodiments of the disclosure, a device of a serving cell in a wireless communication system may include a transceiver and at least one processor, wherein the at least one processor is configured to receive information on an aggregated slot from an aggregated slot management device, aggregate, based on the information on the aggregated slot, traffic to be transmitted during a predetermined interval into the aggregated slot and schedule the aggregated traffic, determine separate adaptive modulation and coding (AMC) for the aggregated slot and a non-aggregated slot, and transmit the traffic of the aggregated slot by using the determined AMC.

According to various embodiments of the disclosure, the at least one processor may be configured to allocate excess traffic to the next slot of the aggregated slot when traffic allocated to the aggregated slot exceeds an allocated radio resource.

According to various embodiments of the disclosure, the aggregated slot may be aligned to the same position across all cells of a base station managed by the aggregated slot management device.

According to various embodiments of the disclosure, the aggregated slot may be repeatedly configured according to a preconfigured period.

According to various embodiments of the disclosure, the at least one processor may be configured to apply a low modulation coding scheduling (MCS) level to the aggregated slot, and apply a high MCS level to the non-aggregated slot.

As described above, according to various embodiments of the disclosure, a method performed by an interfering cell in a wireless communication system may include receiving information on an aggregated slot from an aggregated slot management device, aggregating, based on the information on the aggregated slot, traffic to be transmitted during a predetermined interval into the aggregated slot and scheduling the aggregated traffic, and transmitting the traffic in the aggregated slot.

According to various embodiments of the disclosure, the aggregating of the traffic into the aggregated slot and allocating of the aggregated traffic may include waiting until the traffic is allocated to the most neighboring aggregated slot among slots after a slot in which the traffic has occurred.

According to various embodiments of the disclosure, the aggregated slot may be aligned to the same position across all cells of a base station managed by the aggregated slot management device.

According to various embodiments of the disclosure, the aggregated slot may be repeatedly configured according to a preconfigured period.

As described above, according to various embodiments of the disclosure, a device of an interfering cell in a wireless communication system may include a transceiver and at least one processor, wherein the at least one processor is configured to receive information on an aggregated slot from an aggregated slot management device, aggregate, based on the information on the aggregated slot, traffic to be transmitted during a predetermined interval into the aggregated slot and schedule the aggregated traffic, and transmit the traffic in the aggregated slot.

According to various embodiments of the disclosure, the at least one processor may be configured to aggregate and allocate the traffic to the aggregated slot, and wait until the traffic is allocated to the most neighboring aggregated slot among slots after a slot in which the traffic has arrived.

According to various embodiments of the disclosure, the aggregated slot may be aligned to the same position across all cells of a base station managed by the aggregated slot management device.

According to various embodiments of the disclosure, the aggregated slot may be repeatedly configured according to a preconfigured period.

**Claims**

1. A method performed by a serving base station in a wireless communication system, the method comprising:

   receiving information on an aggregated slot from an aggregated slot management device;
   scheduling, based on the information on the aggregated slot, traffic by aggregating the traffic to be transmitted during a predetermined interval into the aggregated slot;
   determining separate adaptive modulation and coding (AMC) for the aggregated slot and a non-aggregated slot; and
   transmitting the traffic of the aggregated slot to a terminal using the determined AMC.

2. The method of claim 1, wherein the method comprises, in case that traffic allocated to the aggregated slot exceeds an allocated radio resource, allocating excess traffic to a next slot of the aggregated slot.

3. The method of claim 1, wherein the aggregated slot is aligned to a same position across all cells of a base station managed by the aggregated slot management device and is repeatedly configured according to a preconfigured period.

4. The method of claim 1, wherein the determining of the AMC further comprises:

   applying a low modulation coding scheduling (MCS) level to the aggregated slot; and
   applying a high MCS level to the non-aggregated slot.

5. A device of a serving base station in a wireless communication system, the device comprising:

   a transceiver; and
   at least one processor,
   wherein the at least one processor is configured to:

      receive information on an aggregated slot from an aggregated slot management device;

schedule, based on the information on the aggregated slot, traffic by aggregating the traffic to be transmitted during a predetermined interval into the aggregated slot and schedule the aggregated traffic;

determine separate adaptive modulation and coding (AMC) for the aggregated slot and a non-aggregated slot; and

transmit the traffic of the aggregated slot to a terminal using the determined AMC.

6. The device of claim 5, wherein the at least one processor is configured to, in case that traffic allocated to the aggregated slot exceeds an allocated radio resource, allocate excess traffic to a next slot of the aggregated slot.

7. The device of claim 5, wherein the aggregated slot is aligned to a same position across all cells of a base station managed by the aggregated slot management device and is repeatedly configured according to a preconfigured period.

8. The device of claim 5, wherein the at least one processor is configured to:

apply a low modulation coding scheduling (MCS) level to the aggregated slot; and
apply a high MCS level to the non-aggregated slot.

9. A method performed by a neighboring base station in a wireless communication system, the method comprising:

receiving information on an aggregated slot from an aggregated slot management device;
aggregating, based on the information on the aggregated slot, traffic to be transmitted during a predetermined interval into the aggregated slot and scheduling the aggregated traffic; and
transmitting the traffic of the aggregated slot to a terminal.

10. The method of claim 9, wherein the aggregating of the traffic into the aggregated slot and scheduling of the aggregated traffic comprises waiting until the traffic is scheduled to a most neighboring aggregated slot among slots after a slot in which the traffic has occurred.

11. The method of claim 9, wherein the aggregated slot is aligned to a same position across all cells of a base station managed by the aggregated slot management device.

12. The method of claim 9, wherein the aggregated slot is repeatedly configured according to a preconfigured period.

13. A device of a neighboring base station in a wireless communication system, the device comprising:

a transceiver; and
at least one processor,
wherein the at least one processor is configured to:

receive information on an aggregated slot from an aggregated slot management device;
aggregate, based on the information on the aggregated slot, traffic to be transmitted during a predetermined interval into the aggregated slot and schedule the aggregated traffic; and
transmit the traffic of the aggregated slot to a terminal.

14. The device of claim 13, wherein the at least one processor is configured to:

aggregate the traffic into the aggregated slot and schedule the aggregated traffic; and
wait until the traffic is allocated to a most neighboring aggregated slot among slots after a slot in which the traffic has occurred.

15. The device of claim 13, wherein the aggregated slot is aligned to a same position across all cells of a base station managed by the aggregated slot management device and is repeatedly configured according to a preconfigured period.

FIG.1

FIG.2

FIG.3

FIG.4

EP 4 513 816 A1

| Slot | | 0 | 1 | 2 | 3 | 4 | 5 | 6 | 7 | 8 | 9 | 10 | 11 |
|---|---|---|---|---|---|---|---|---|---|---|---|---|---|
| TDD config | | D | D | D | F | U | D | D | D | F | U | D | D |
| Arrival time point at BO | | | | Arrival at BO | | | | | | | | | |
| Short BO slot | | 0 | X | X | X | X | 0 | X | X | X | X | 0 | X |
| Aggregated slot alignment OFF | Short BO | | | Allocation | | | | | | | | | |
| | Heavy BO | | | Allocation | Allocation | | Allocation | Allocation | Allocation | Allocation | | Allocation | Allocation |
| Aggregated slot alignment ON | Short BO | | | | | | Allocation | | | | | | |
| | Heavy BO | | | | | | Allocation | Allocation | Allocation | Allocation | | Allocation | Allocation |

510          520

# FIG.5

FIG.6

| | | | | | | | | | |
|---|---|---|---|---|---|---|---|---|---|
| PDCCH | | | | | | | | | |
| CB#1 | | CB#2 | | | | | | | |
| DMRS | | | | | | | | | |
| CB#3 | | CB#4 | | CB#5 | | | | | |
| | | CB#6 | | CB#7 | | | | | |
| | | CB#8 | | CB#9 | | | | | |
| CB#10 | | CB#11 | | | | | | | |
| DMRS | | | | | | | | | |
| CB#12 | | CB#13 | | CB#14 | | | | | |
| CB#15 | | CB#16 | | | | | | | |

Allocated RBs

FIG.7

EP 4 513 816 A1

| MCS | Number of CBs | | | |
|---|---|---|---|---|
| | Rank 1 | Rank 2 | Rank 3 | Rank 4 |
| 0 | 3 | 5 | 7 | 9 |
| 1 | 4 | 8 | 11 | 15 |
| 2 | 3 | 6 | 8 | 11 |
| 3 | 4 | 8 | 12 | 16 |
| 4 | 5 | 10 | 16 | 20 |
| 5 | 7 | 13 | 19 | 26 |
| 6 | 8 | 15 | 22 | 30 |
| 7 | 9 | 17 | 25 | 34 |
| 8 | 10 | 19 | 28 | 37 |
| 9 | 11 | 21 | 32 | 41 |
| 10 | 11 | 22 | 34 | 44 |
| 11 | 12 | 24 | 36 | 47 |
| 12 | 13 | 26 | 39 | 52 |
| 13 | 15 | 29 | 43 | 57 |
| 14 | 16 | 32 | 47 | 63 |
| 15 | 17 | 34 | 50 | 67 |
| 16 | 18 | 36 | 55 | 72 |
| 17 | 20 | 39 | 59 | 78 |
| 18 | 21 | 41 | 63 | 82 |
| 19 | 22 | 44 | 67 | 88 |
| 20 | 23 | 46 | 69 | 92 |
| 21 | 24 | 48 | 72 | 96 |
| 22 | 26 | 51 | 76 | 102 |
| 23 | 27 | 54 | 80 | 107 |
| 24 | 29 | 57 | 84 | 113 |
| 25 | 30 | 60 | 90 | 119 |
| 26 | 31 | 62 | 92 | 123 |
| 27 | 33 | 65 | 96 | 129 |

| MCS | Floor (RBs per CB) | | | |
|---|---|---|---|---|
| | Rank 1 | Rank 2 | Rank 3 | Rank 4 |
| 0 | 273 | 273 | 273 | 273 |
| 1 | 273 | 273 | 273 | 200 |
| 2 | 273 | 273 | 273 | 273 |
| 3 | 273 | 273 | 250 | 188 |
| 4 | 273 | 273 | 188 | 150 |
| 5 | 273 | 231 | 158 | 116 |
| 6 | 273 | 200 | 137 | 100 |
| 7 | 273 | 177 | 120 | 88 |
| 8 | 273 | 158 | 107 | 81 |
| 9 | 273 | 143 | 94 | 73 |
| 10 | 273 | 137 | 88 | 68 |
| 11 | 250 | 125 | 83 | 64 |
| 12 | 231 | 116 | 77 | 58 |
| 13 | 200 | 104 | 70 | 53 |
| 14 | 188 | 94 | 64 | 48 |
| 15 | 177 | 88 | 60 | 45 |
| 16 | 167 | 83 | 55 | 42 |
| 17 | 150 | 77 | 51 | 39 |
| 18 | 143 | 73 | 48 | 37 |
| 19 | 137 | 68 | 45 | 34 |
| 20 | 131 | 65 | 44 | 33 |
| 21 | 125 | 63 | 42 | 31 |
| 22 | 116 | 59 | 40 | 29 |
| 23 | 111 | 56 | 38 | 28 |
| 24 | 104 | 53 | 36 | 27 |
| 25 | 100 | 50 | 33 | 25 |
| 26 | 97 | 48 | 33 | 24 |
| 27 | 91 | 46 | 31 | 23 |

FIG.8

900

910

Serving cell

920

Aggregated
slot management
device

930

Interfering
cell

935

Configure
aggregated slot

Information on
aggregated slot

Information on
aggregated slot

940

945

Allocate
traffic to
aggregated slot

960

Allocate
traffic to
aggregated slot

950

Determine
AMC

955

Transmit
traffic

965

Transmit
traffic

FIG.9

1000

START

RECEIVE INFORMATION ON AGGREGATED SLOT
FROM AGGREGATED SLOT MANAGEMENT DEVICE ~1010

AGGREGATE, BASED ON INFORMATION ON
AGGREGATED SLOT, TRAFFIC TO BE TRANSMITTED
IN PREDETERMINED INTERVAL INTO AGGREGATED ~1020
SLOT AND SCHEDULE AGGREGATED TRAFFIC

DETERMINE SEPARATE AMC FOR AGGREGATED
SLOT AND NON-AGGREGATED SLOT ~1030

TRANSMIT TRAFFIC OF AGGREGATED SLOT TO
UE BY USING DETERMINED AMC ~1040

END

FIG.10

1100

START

RECEIVE INFORMATION ON AGGREGATED SLOT
FROM AGGREGATED SLOT MANAGEMENT DEVICE ~1110

AGGREGATE, BASED ON INFORMATION ON
AGGREGATED SLOT, TRAFFIC TO BE TRANSMITTED
IN PREDETERMINED INTERVAL INTO AGGREGATED
SLOT AND SCHEDULE AGGREGATED TRAFFIC ~1120

TRANSMIT TRAFFIC OF AGGREGATED SLOT TO UE ~1130

END

FIG.11

FIG.12

FIG.13

FIG.14

EP 4 513 816 A1

1500

Base station

1510

Communication unit

1520

Storage unit

1530

Controller

FIG.15

<table>
<tr><td colspan="2" align="center">**INTERNATIONAL SEARCH REPORT**</td><td>International application No.<br>**PCT/KR2023/006380**</td></tr>
</table>

**A. CLASSIFICATION OF SUBJECT MATTER**

**H04L 5/00**(2006.01)i; **H04L 1/00**(2006.01)i; **H04W 72/04**(2009.01)i; **H04W 72/50**(2023.01)i; **H04J 11/00**(2006.01)i; **H04W 72/541**(2023.01)i; **H04W 72/53**(2023.01)i; **H04W 24/08**(2009.01)i

According to International Patent Classification (IPC) or to both national classification and IPC

**B. FIELDS SEARCHED**

Minimum documentation searched (classification system followed by classification symbols)

H04L 5/00(2006.01); H04L 1/18(2006.01); H04L 5/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 집중 슬롯(aggregated slot), 트래픽(traffic), 어그리게이션(aggregation), AMC

**C. DOCUMENTS CONSIDERED TO BE RELEVANT**

| Category* | Citation of document, with indication, where appropriate, of the relevant passages | Relevant to claim No. |
|---|---|---|
| Y | US 2020-0106590 A1 (QUALCOMM INCORPORATED) 02 April 2020 (2020-04-02)<br>See paragraphs [0083]-[0088]; claims 1-2; and figure 10. | 9,13 |
| A | | 1-8,10-12,14-15 |
| Y | NOKIA et al. Further discussion of aspects related to HARQ for NR over NTN. R1-2109166, 3GPP TSG RAN WG1 #106bis, e-Meeting. 01 October 2021.<br>See page 4. | 9,13 |
| A | INTERDIGITAL, INC. HARQ enhancement for NTN. R1-2108033, 3GPP TSG RAN WG1 #106-e, e-Meeting. 06 August 2021.<br>See pages 1-3. | 1-15 |
| A | WO 2020-088744 A1 (HUAWEI TECHNOLOGIES CO., LTD. et al.) 07 May 2020 (2020-05-07)<br>See pages 9-10; and figures 1-4. | 1-15 |
| A | WO 2021-058992 A1 (OROPE FRANCE SARL) 01 April 2021 (2021-04-01)<br>See paragraphs [0043]-[0058]; and figure 2. | 1-15 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **28 August 2023** | **28 August 2023** |

| Name and mailing address of the ISA/KR | Authorized officer |
|---|---|
| Korean Intellectual Property Office<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| | International application No. |
|---|---|
| | **PCT/KR2023/006380** |

| Patent document cited in search report | | | Publication date (day/month/year) | Patent family member(s) | | | Publication date (day/month/year) |
|---|---|---|---|---|---|---|---|
| US | 2020-0106590 | A1 | 02 April 2020 | US | 11108530 | B2 | 31 August 2021 |
| | | | | WO | 2020-068441 | A1 | 02 April 2020 |
| WO | 2020-088744 | A1 | 07 May 2020 | CN | 112956150 | A | 11 June 2021 |
| | | | | CN | 112956150 | B | 26 August 2022 |
| | | | | EP | 3864787 | A1 | 18 August 2021 |
| WO | 2021-058992 | A1 | 01 April 2021 | BR | 112022005429 | A2 | 21 June 2022 |
| | | | | CN | 114342294 | A | 12 April 2022 |
| | | | | CN | 115250163 | A | 28 October 2022 |
| | | | | EP | 4018579 | A1 | 29 June 2022 |
| | | | | JP | 2022-553875 | A | 26 December 2022 |
| | | | | KR | 10-2022-0065030 | A | 19 May 2022 |
| | | | | US | 2022-0216954 | A1 | 07 July 2022 |

Form PCT/ISA/210 (patent family annex) (July 2022)